(19) Europäisches Patentamt
European Patent Office
Office européen des brevets

(11) **EP 2 629 248 A1**

(12) **EUROPEAN PATENT APPLICATION**

(43) Date of publication:
**21.08.2013 Bulletin 2013/34**

(51) Int Cl.:
***G06N 99/00*** (2010.01)   ***G06N 5/02*** (2006.01)
***H04N 21/25*** (2011.01)   ***G06Q 30/02*** (2012.01)

(21) Application number: **12305170.8**

(22) Date of filing: **15.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Massoulié, Laurent**
**92420 Vaucresson (FR)**

• **Hegde, Nidhi**
**75005 Paris (FR)**
• **Banerjee, Siddhartha**
**92443 Issy-les-Moulineaux (FR)**

(74) Representative: **Lindemann, Robert et al**
**Deutsche Thomson OHG**
**European Patent Operations**
**Karl-Wiechert-Allee 74**
**30625 Hannover (DE)**

(54) **Method of creating content recommendations based on user ratings of content with improved user privacy**

(57)   A recommendation system provides improved privacy under the local model, in which users store their data locally, and differential privacy is ensured through randomization of ratings under the control of the user before submitting data to the recommender system. The recommender system performs a clustering on the data collected from a plurality of users and returns the results to the users. The users' devices fine-tune the recommendation based on locally stored, non-randomized ratings. The recommendation system provides a user-adjustable degree of privacy while still allowing for generating recommendations with a decent accuracy.

Fig. 1

**Description**

Recommender systems are fast becoming one of the cornerstones of the Internet. In a world with ever increasing choices, they are one of the most effective ways of matching users with items. Today, many websites use some form of such systems. Recommendation engines ask users to rate certain items, e.g. books, movies or music, infer the ratings of other items from this data, and use these inferred ratings to recommend new items to users. However, the data collected, if anonymized at all, can be de-anonymized and compromise the privacy of those users who submitted ratings.

In order to allow for improved privacy of users providing ratings a new approach also referred to as differential privacy has been developed, recognising that, although perfect privacy is impossible to be had, a user may be put in control of the information provided through deliberately corrupting sensitive data before submitting ratings, and declaring to do so.

In the context of recommender systems there are essentially two models of providing differential privacy, centralised and local. Under the centralised model the recommender system needs to be trusted to be able to collect data from users, and must be trusted to respond to queries by publishing either only aggregate statistics or sensitive data that has been corrupted through a mechanism that obeys the differential privacy constraint. Under centralized differential privacy ratings are stored in the recommending device and the user of such system must trust the operator that privacy is guaranteed.

US2011/0064221 discloses a differential privacy recommendation method following the centralised model in which noise is added centrally in the correlation engine only after the correlation has been done.

Further information on the design of recommender systems with differential privacy under the centralised model can be found in F. McSherry and I. Mironow "Differentially Private Recommender Systems: Building Privacy into the Netflix Prize Contenders", KDD, 2009, pp. 627-636.

WO 2008/124285 suggests a recommendation system using a sample group of users that is a sub-group of a larger group, for rating items. The rated items are suggested to other users if the rating from the sub-group exceeds a preset value.

US 2011/0078775 discloses adjusting a trust value associated with content through a trust server based on locally collected credibility information.

Users increasingly desire control over their private data given the mistrust towards systems with centrally stored and managed data.

The present invention provides improved privacy under the local model, in which users store their data locally, and differential privacy is ensured through randomization under the control of the user before submitting data to the recommender system. The invention provides a user-adjustable degree of privacy while still allowing for generating recommendations with a decent accuracy.

In accordance with one aspect of the invention user ratings, generated under privacy at the user's location, of items are requested by a content provider or a recommendation engine for making recommendations to other users. The request is done as bulk request, i.e. a list of items, without knowledge which or indeed whether any of the items in the list have been "consumed" or rated by the user. In this context "consumed" includes any activity involving an item that allows for rating the item. The user's device provides an aggregate rating in response. In order to provide a certain degree of privacy the user can add a value indicating the likelihood that the returned rating is exact and reliable, i.e. a "trust value". The trust value may be provided for individual items in the rated list, or as a global value for the entire list. It is also possible to have a user's device randomly add trust values, or add these trust values at random to individual items or the entire list. It is likewise conceivable of a user presetting a range of trust values, from which the user's device randomly picks trust values for privatizing the ratings. This adds a form of data noise to the ratings, which in turn enhances the user privacy.

The content provider receives the rated item lists and the associated trust value from a plurality of users and clusters items from the received lists into clusters of items similarly "liked" by a number of users in according with their ratings and the "trust value". The content of each cluster is likely to be liked by the set of users who also liked other contents within this cluster. The content provider or recommendation engine returns the results of the clustering to the users. A user's device locally stores its response provided to the content provider or to the recommendation engine and uses this reliable information for extracting items contained in the cluster such that recommendations can be made to each individual user.

Aspects of the invention pertain to improving the accuracy of content recommendation depending on whether the basic data used for clustering originates from an information-scarce or an information-rich environment, while maintaining improved privacy.

Information-rich in this context relates to a situation in which the rated item is known to have a rating assigned to it, while the rating itself is privatized.

Information-scarce as used in the present specification relates to an environment, in which a user provides ratings only for a small fraction of content items of a set of content items, and possibly even a varying fraction. Also, no information may be provided whether a user has consumed an item at all. In this context $[N]$ is used as a reference to a set $\{1, 2,..., N\}$ of $N$ ordered items, and $[U]$ is used as a reference to a set of $U$ users. The set of users is divided into $K$ clusters labelled $C_u = \{1, 2,.... K\}$, where cluster $i$ contains $\alpha_i U$ number of users. Similarly, the set of items is divided into $L$ clusters $C_n = \{1, 2,..., L\}$, where cluster $l$ contains $\beta_l N$ number of items. $A$ denotes the matrix of user/item ratings, each row corresponding to a user and each column corresponding to an item. For simplicity it is assumed that $A_{ij} \in \{0, 1\}$. This could, for example, correspond to 'like/dislike' ratings.

The following statistical model is used for the ratings: for user $u \in U$ with user class k, and item n $\in$ [$N$] with item class $l$, the rating $A_{un}$ is given by a Bernoulli random variable $A_{un} \sim$ Bernoulli ($b_{kl}$), where the ratings by users in the same class, and for items in the same class, are independent and identically distributed (i.i.d.). Finally, for modelling limited information, i.e., the fact that users rate only a small fraction of all items, parameter ω represents the number of items each user has rated. For the purpose of explanation within this specification parameter ω is assumed to be constant. However parameter ω could as well be a lower or upper bound on the number of items rated. Likewise, for the purpose of explanation within this specification it is assumed that the set of rated items is picked uniformly at random. The expression $\omega = \Omega(N)$ represents an information-rich environment and expression $\omega = o(N)$ represents an information-scarce environment.

A random ized function $\psi : X \to Y$ that maps data X $\in$ $X$ to Y $\in$ $Y$ is said to be $\epsilon$-differential private, or $\epsilon$-DP, if for all values $y \in Y$ in the range space of $\psi$, and for all 'neighbouring' data $x, x'$ the following (in-)equation holds true:

$$\frac{P[Y=y|X=x]}{P[Y=y|X=x']} \leq e^{\epsilon}$$

The definition of 'neighbouring' data is chosen according to the situation and determines the properties of the data that remain private. Two databases are said to be neighbours if the larger database is constructed by adding a single row to the smaller database; if the rows correspond to the data of a single individual, then differential privacy can be thought as guaranteeing that the output does not reveal the presence or absence of any single individual in the database. Similarly, in the context of rating matrices, two matrices can be neighbours if they differ in a single row, corresponding to per-user privacy, or if they differ in a single rating, corresponding to per-rating privacy.

Recommender systems generate predictions of user preference by determining correlations between the limited data, i.e. items and ratings, provided by users, and using this limited data to infer information about unknown ratings. One way to do this is by clustering the items into a set of classes, e.g. by finding and using correlations between the rankings given to each item by a multiplicity of users, and then releasing this classification. The items considered by the present recommender system are thus assumed to have a cluster structure, i.e. items may be clustered in accordance with specific item properties. Using this classification, and using their own personal rankings, users can determine their potential ratings for new content, taking into account algorithms which are used by the recommender system for determining the classification.

The recommendation method in accordance with the invention comprises two main phases: a learning phase and a recommendation phase. The learning phase is performed collaboratively with privacy guaranteed, while the actual recommendation is performed by the user's devices, based upon a general recommendation that is a result of the learning phase, without additional interaction with the system.

In the learning phase the clusters are populated. In the recommendation phase the populated clusters are revealed to the users. Each user can then derive recommendations based upon the populated clusters and locally stored data about the user's ratings of items and respective trust values associated with rated items.

In a hypothetical information-rich environment a minimum number $U_{LB}$ of users required for learning a concept class $C$ under $\epsilon$-differential privacy can be calculated as

$$U_{LB} = \Omega \left( \frac{\log |C|}{\epsilon} \right).$$

In the following the quantity $log |C|$ is referred to as the complexity of concept class $C$.

In order to derive recommendations a low-dimensional clustering of the set of items in dependence of the user ranking matrix is required. In this context the concept class is the set of mappings from items [$N$] to cluster labels $[L]$, L typically being much smaller then $N$, having a complexity of $N \log L \approx O(N)$. It is further assumed that each user has only rated $w$ items out of the possible $N$ items. In the information-rich environment, with $w = \Omega(N)$, in which each user has rated a constant fraction of all items, the minimum required number of users $U_{LB}$ for a local differential privacy algorithm based on spectral clustering techniques, in particular based on the Pairwise-Preference Algorithm, is calculated using the following equation:

$$U_{PP}^{IR} = O \left( \frac{N \log N}{\epsilon} \right).$$

It is to be noted that in this environment only the user ratings are private, while the identity of any item rated by the user is not.

However, in most practical scenarios, the information-rich assumption may not be valid. For example, in a movie rating system most users usually have seen and rated only a small fraction of the set of movies. Therefore, in another aspect of the present invention local differential privacy in an information-scarce environment with $w = o(N)$ is considered. In the information-scarce environment the minimum number of users $U_{LB}$ required can be determined using the following equation:

$$U_{LB}^{IS} = \Omega\left(\frac{N^2}{w^2}\right).$$

For the special case of $w = o(N^{1/3})$ the previous equation can be simplified into

$$U_{LB}^{IS} = \Omega\left(\frac{N^2}{w}\right).$$

In accordance with the invention a user is provided with a list of items to be rated. These items could be, for example, content items as found in audiovisual content. However, the items could as well relate to anything else that can be electronically rated. The user rates, in privacy, e.g. by using a device to which the user has exclusive access, at least some of the items. The rating of an item list through the users is a form of "bulk" rating without knowledge which, or indeed whether any of the items in the list have been rated, or consumed, by the user. The user then selects a degree of trust that is assigned to individual ratings or assigned globally to all items in the list of items, thereby "privatizing" the ratings. The degree of trust is a value indicating the likelihood that the returned rating is exact and reliable. This adds noise to the ratings, which enhances the user privacy. The rated and "privatized" list is submitted to a recommender device. The returned rating can be considered an aggregate rating. The recommender device may be operated by the provider of the items to be rated, or operated by a third party providing a recommendation service. The recommender device collects rated lists of items from a predetermined minimum number of users and performs a clustering on the lists, clustering items of similar content and/or similar rating. The clustering takes the degree of trust into account that has been assigned to the items or to the lists. The content of each cluster is likely to be liked by the set of users who also liked other contents within this cluster. The clustered items are used to generate a list of recommended items, which is returned to the users that had provided their rating on one or more items.

However, not every user whose "bulk" response has been used in creating the cluster has actually "consumed" the content. In accordance with the response from an individual user, and the content items contained in the cluster, recommendations can be made to that individual user. A version of the rated list prior to "privatization" may be stored locally in the user's device. This knowledge may be used refining the recommendation to each individual user, deleting items from the recommendation that had already been consumed. For example, a movie that a user had watched and rated is not recommended again, even if it is on a recommendation list, based on the non-privatized knowledge in the user's device. Storing true ratings and related data only locally in the user's device, and providing "bulk" rating is one aspect that provides the desired degree of privacy. Assigning a trust value at the user's side and providing the ratings only after assigning the trust value is a further aspect that provides the desired degree of privacy. It can be compared to adding noise that "hides" data a user wishes to keep private, and at the same time reduces the confidence that a user must have in the provider of the recommendation service.

In one aspect of the invention the "consumption" habits of the users is not considered private, while their ratings are, i.e. the information whether a user "consumed" an item from the list of items is public and true, while information how a user actually rated the item is private. This is applicable in many scenarios, as in order to "consume" the item, e.g. view a movie, the user most likely will leave a trail of information.

For example, if the recommendation engine is connected to a movie content provider system, then recommendation engine has knowledge of what content the user has watched. In this context, in accordance with an exemplary embodiment of the invention, each user is first presented two movies, both of which the user has watched. These two movies may be picked at random. Next, the user converts the rating for these two movies to normalized rating that lies in {0,1}. This may be done by a scheme which maps each possible rating to {0,1} according to a randomized function, which can be user-preset in the user's device, or user-controlled for each rating. Then a private 'sketch' is determined, which consists of a single bit. This bit is set to 1 if both movies have the same normalized rating, and else set to 0. The sketch bit may also be referred to as similitude indicator. Next, the sketch bit is privatized according to a given procedure, e.g. a trust value is assigned in accordance with which the true sketch bit is provided to the recommendation device with a certain specified probability, or else the complement of the sketch bit is provided. This step ensures differential privacy. The recommendation engine then stores these 'pairwise preference' values in a matrix, and performs spectral clustering on this matrix to determine the movie clusters, which are then released. The spectral clustering may include adding the sketch values provided by the users for each identical pair.

In the following, a more detailed mathematical representation of the preceding embodiment of the invention is presented. It is assumed that N items can be rated by $U$ users. Each user has a set of $w$ ratings ($W_u$,

$R_u$), $W_u \in \binom{[N]}{w}$, $R_u \in \{0,1\}^w$. Each item $i$ is associated with a cluster $C_N(i)$ from a set of L clusters, $\{1, 2,..., L\}$.

In accordance with the recommendation method, for each user $u \in [U]$ a pair of items $P_u = \{i_u, j_u\}$ is picked. Picking may be at random in the information rich environment with $w = \Omega(N)$. If $W_u$ is known, a random set of two rated items may be picked. A user's device determines a private sketch that is 1 if the ratings of the two items are identical, or, if the normalized ratings thereof are identical, and otherwise is 0. If an item has no rating, the rating is assigned a value of 0. This private sketch, also referred to as $S_u^0$, is then privatized as follows.

With probability $\frac{e^\epsilon}{1+e^\epsilon}$ the released sketch $S_u = S_u^0$,

and with probability $\frac{1}{1+e^\epsilon}$ the released sketch $S_u = \overline{S_u^0}$.

Then a pair-wise preference matrix $A$ is generated in accordance with

$$A_{ij} = \sum_{u \in U | P_u = \{i,j\}} S_u$$

and the top L normalized eigenvectors $x_1, x_2,..., x_L$ corresponding to the L largest magnitude eigenvalues of matrix $A$ are extracted. Each row (node) is projected into the L-dimensional profile space of the eigenvectors, and k-means clustering is performed in the profile space for obtaining the item clusters.

In another aspect of the invention both the "consumption" habits, i.e. whether or not an item has been consumed, as well as the ratings of the users are considered private information. In order to produce meaningful recommendations, this information-scarce environment requires collecting information for a much larger set of items from each user than only two, as being sufficient in the preceding example for the information-rich environment. In this case a user's device is presented with a sensing vector of binary values. Each vector component corresponds to an item from the set of items. For example, in terms of the preceding paragraph, each item corresponds to a movie. The sensing vector determines whether a movie from the set of movies is probed. A movie may be probed for example if the corresponding component of the vector is '1'. The user's device, in the same manner as described in the previous paragraph, converts all ratings to normalized ratings for the probed movies, and sets the normalized rating for unwatched movies to 0. Next, the user's device calculates the maximum normalized value among the probed movies, i.e., movies for whom the corresponding component in the sensing vector was '1', and releases a privatized version of this vector component. The privatization mechanism is the same as before, i.e. the logical value is flipped or not in accordance with the probability, or trust value assigned. A sketch bit indicates if a movie has the same normalized rating as the maximum normalized value determined before. A trust value indicates the probability of the sketch bit being true. The recommendation engine then combines these vector components in the following way: for each movie, the engine calculates the sum of the privatized user ratings over all users for whom the corresponding movie was probed, i.e., for whom the corresponding element in the sensing vector was set to '1'. Next, the engine uses these 'movie sums' to perform k-means clustering in 1-dimension, and returns the so-obtained movie classifications.

In a variant of the preceding embodiment the sensing vectors may also be randomly generated by the users. In this case the vector must be provided to the recommendation engine in addition to their privatized rating. In either case differential privacy is maintained as long as the sensing vector is independent of the set of items actually rated by the user.

In the following, a more detailed mathematical representation of the preceding embodiment of the invention is presented. As before it is assumed that N items can be rated by U users. Each user has a set of w ratings $(W_u, R_u) \in \binom{[N]}{w}$, $W_u \ R_u \in \{0,1\}^w$. Each item $i$ is associated with a cluster $C_N(i)$ from a set of L clusters, $\{1, 2,..., L\}$.

In accordance with the recommendation method, for each user $u \in [U]$ a sensing vector $H_u \in \{0,1\}^N$ is generated, $H_{ui}$ being a 'probe' for item $i$ given by

$H_{ui} \sim$ Bernoulli(p), i.i.d, with $p = \frac{\theta}{w}$, $\theta$ being a chosen constant.

Then a user's device determines the maximum rating within the ratings for items corresponding to the sensing vector in accordance with

$$S_u^0(W_u, R_u, H_u) = max_{i \in [N]} H_{ui} \hat{R}_{ui},$$

with $\hat{R}_{ui} = R_{ui}$ if $i \in W_u$, and 0 otherwise. The result is a vector indicating all items that have identical maximum ratings. Each user's device provides a privatized version of this vector, the vector including privatized ratings $S_u$ for each item. Privatization is achieved, as discussed before, by assigning a trust value to the rating. It is noted that in a variant of this embodiment the vector may indicate those items that have a rating above a predetermined threshold. Likewise, in this embodiment as well as in the previously discussed embodiments, normalization may not be needed, depending on the items' features and/or properties considered when rating.

In other words: the sensing vector $H_{ui}$ essentially asks for ratings of those items whose indices are 1 in this vector. The user device constructs a sketch $S°$, which is 1 if at least one of these items is rated 1, and 0 otherwise. (Similarly for normalized ratings) The user device then privatizes this sketch as follows: it outputs the sketch $S=S^0$ with probability $(\exp(eps)/(1+\exp(eps)))$, eps being the privacy parameter, and with probability $(1/(1+\exp(eps)))$ it flips the sketch and outputs $S=\overline{S^0}$. Note that this is not the same as a sketch bit of 1 if all ratings are identical.

The recommendation engine then determines a count $B_i$ in accordance with

$$B_i = \sum_{u \in U} H_{ui} S_u$$

and performs a k-means clustering on the counts $B_i$.

In yet another variant the user's device is presented a multiplicity of sensing vectors, each sensing vector being determined to cover a randomly chosen subset of the entire set of items. Ratings and privatization are processed as described before. It is obvious that this variant also allows for sensing vectors randomly generated at the user's device, the sensing vectors not being private information and being transmitted to the recommendation engine.

In the following, a more detailed mathematical representation of the preceding variant of the invention is presented. As before it is assumed that $N$ items can be rated by $U$ users. Each user has a set of w ratings

$$(W_u, R_u) \in \binom{[N]}{w} \times_u \{0,1\}^w. \text{ The number of rat-}$$

ings presented to a user's device is $Q$. Each item $i$ is associated with a cluster $C_N(i)$ from a set of $L$ clusters, $\{1, 2,..., L\}$.

First, for each user $u \in [U]$, $Q$ sensing vectors $H_{(u, q)} \in \{0,1\}^N$ are generated, each vector being generated by choosing $Np$ items uniformly, without replacement and non-overlapping with other sensing vectors. As before, the probability $p$ of an item to be probed in any sensing vector is $p = \frac{1}{w}$. For each of the $Q$ sensing vectors, the user's device returns a privatized response $S_{(u,q)}$ to the recommendation engine.

For each item the recommendation engine determines a count $B_i$ from the privatized responses in accordance with

$$B_i = \sum_{u \in U} \sum_{q \in [Q]} H_{(u,q)i} S_{(u,q)}$$

and performs k-means clustering on the counts $B_i$.

In the following, the invention will be further elucidated with reference to the drawings, in which

Figure 1 shows a schematic block diagram of a system in accordance with the invention;
Figure 2 shows a schematic block diagram of a user device in accordance with the invention;
Figure 3 schematically shows the distribution of information flow and processing operations for a first embodiment of the invention;
Figure 4 schematically shows the distribution of information flow and processing operations for a second embodiment of the invention;
Figure 5 schematically shows the distribution of information flow and processing operations for a variant of the second embodiment of the invention; and
Figure 6 represents an exemplary and schematic view of vector operations performed in accordance with the second embodiment of the invention.

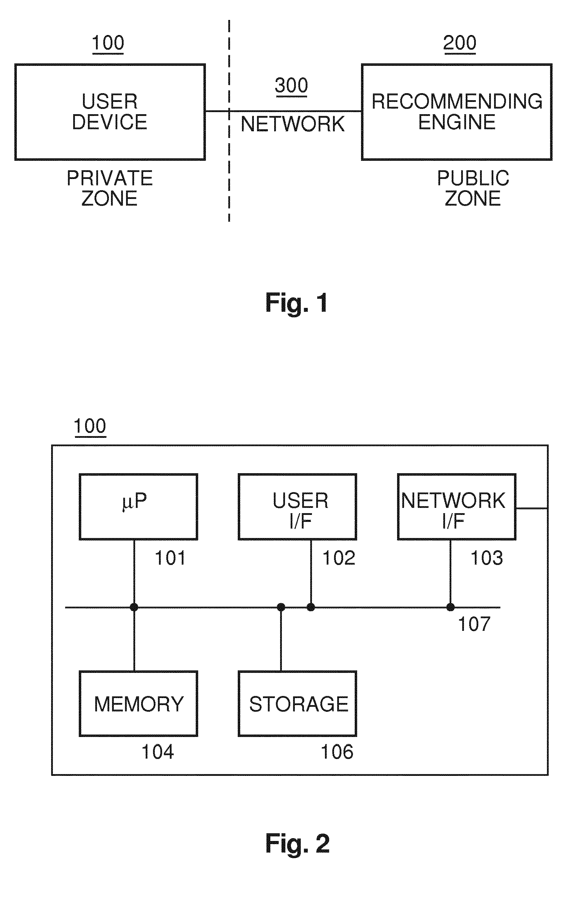

Figure 1 shows a schematic block diagram of a recommender system in accordance with the invention. User device 100 is located in a private zone, which is does not reveal any data considered private to a public zone. The border between the private zone and the public zone is indicted by the dashed line. Recommending engine 200 is located in the public zone, i.e. data that is processed in this zone may be visible to an arbitrary set of users, entities, etc. User device 100 and recommending engine 200 are connected via network 300, e.g. an IP network, a cable network, a telephone network, or the like. Multiple (not shown) user devices 100 are connected to recommending engine 200, making up the recommender system.

Figure 2 shows a schematic block diagram of a user device 100 in accordance with the invention. In user device 100 microprocessor 101, user interface 102, network interface 103, memory 104 and storage 106 are connected via a general bus system 107. The actual interconnection may vary depending on the system architecture, and it is conceivable and within the scope of the invention to use several connection buses in parallel, not all buses connecting all of the components with. Direct connections between individual components are likewise possible and considered within the scope of the invention. Memory 104 and storage 106 may be separate and of different type, or may be combined. User interface 102 may be provided in the user device, or may be provided as an interface to external components such as a display, a keyboard, a remote control, and the like.

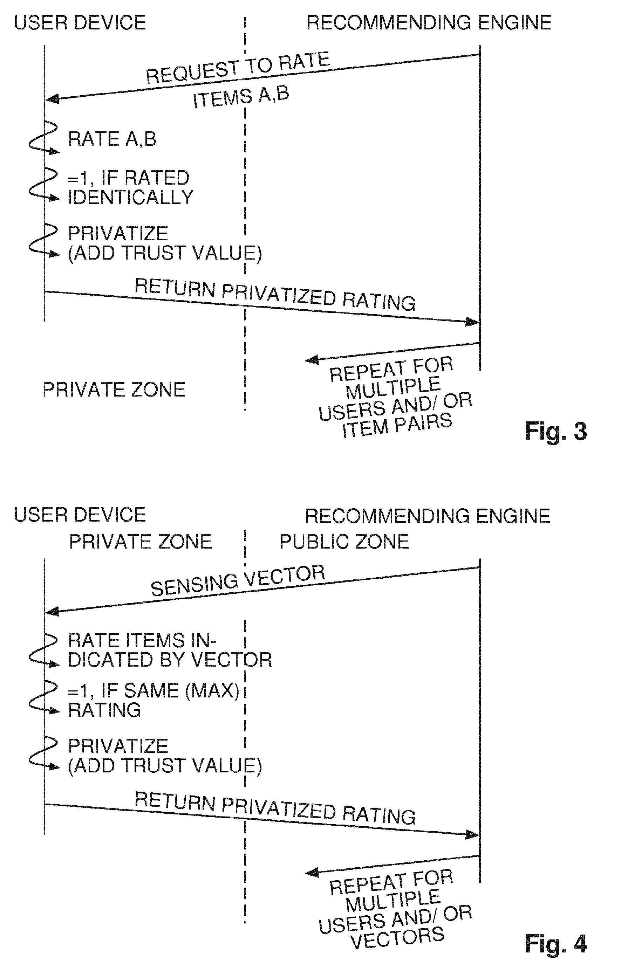

Figure 3 schematically shows the distribution of information flow and processing operations for a first embodiment of the invention. A recommending engine issues a request to a user device, asking the user device to rate a pair of items A, B. The request crosses the border between the public and the private zones, indicated by a dashed line. The request may be public but, as will be shown in the following, the response has been privatized to some extent while being processed in the private zone. In the context with all aspects of the invention the privacy in the private zone is established through measures under the control of the user, including physical privacy, i.e. restricted access to the user's device or the user's premises. The user's device rates the pair of items A, B, in accordance with current or previous user input and/ or by evaluating user behaviour monitored and stored while the user consumed the items to be rated. If the two items have the same user rating, the pair is assigned a logical rating value of '1', otherwise the rating value is '0'. The rating value is privatized by assigning a trust value indicating the probability of the rating value actually being true, i.e. the probability that the binary value is flipped or not. The rating value and the trust value are returned as a response to the recommending engine. The recommending engine collects a multiplicity of ratings for a multiplicity of pairs from a plurality of users. The pairs may be identical for various users, but may as well be made from different items, including combining one item already rated before with another item that had not been rated before, so as to create a larger database for analysis and clustering. Sending only a probable rating provides for a certain degree of privacy. The trust value is user adjustable, i.e. a user can select different trust values for individual ratings.

Figure 4 schematically shows the distribution of information flow and processing operations for a second embodiment of the invention. A recommending engine located in the public zone issues a request to a user device, asking to provide a rating for items indicated 'to rate' in a 'sensing vector'. For example, a logical value '1' indicates 'rate this item', while a logical value '0' indicates 'do not rate'. The user device rates the items indicated by the sensing vector and assigns a logical value '1' to all items having the same, maximum rating. The result is privatized by assigning a trust value in the same manner as before. The response has the form of a rating vector, and a trust value valid for all rated items is assigned. The so-privatized rating vector is then returned to the recommending engine, along with the trust value or trust values. The recommending engine collects a multiplicity of ratings for a multiplicity of sensing vectors from a plurality of users. The sensing vectors may be identical for various users, but may as well be made from different items, including combining one item already rated before with another item that had not been rated before, so as to create a larger database for analysis and clustering. Also, the sensing vectors may only cover a subset of all rateable items, multiple subsets covering the entire set of rateable items in a non-overlapping or overlapping manner.

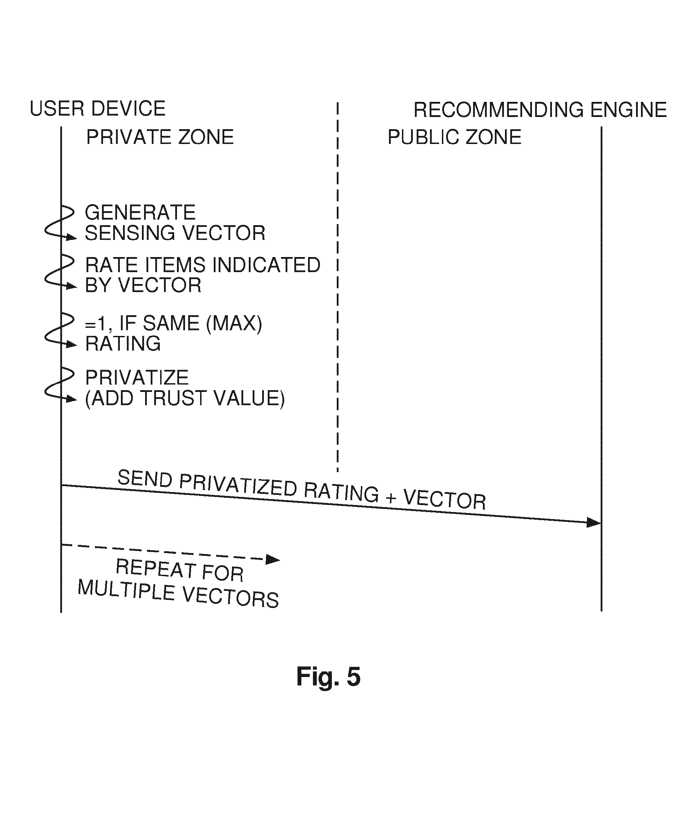

Figure 5 schematically shows the distribution of information flow and processing operations for a variant of the second embodiment of the invention. The process differs from the one shown in figure 4 in that the sensing vector is generated by the user's device either following a timed schedule or in response to a request to rate (not shown). The user's device returns the privatized rating as before, including a representation of the locally generated sensing vector, or by adding corresponding information to the rating vector. The user's device may provide multiple different rating vectors to the recommending engine so as to allow for a large database for generating recommendations.

The recommendations are transmitted to the user devices, which, present the recommendations to the user, optionally improved by taking locally stored 'true' and trusted information into account.

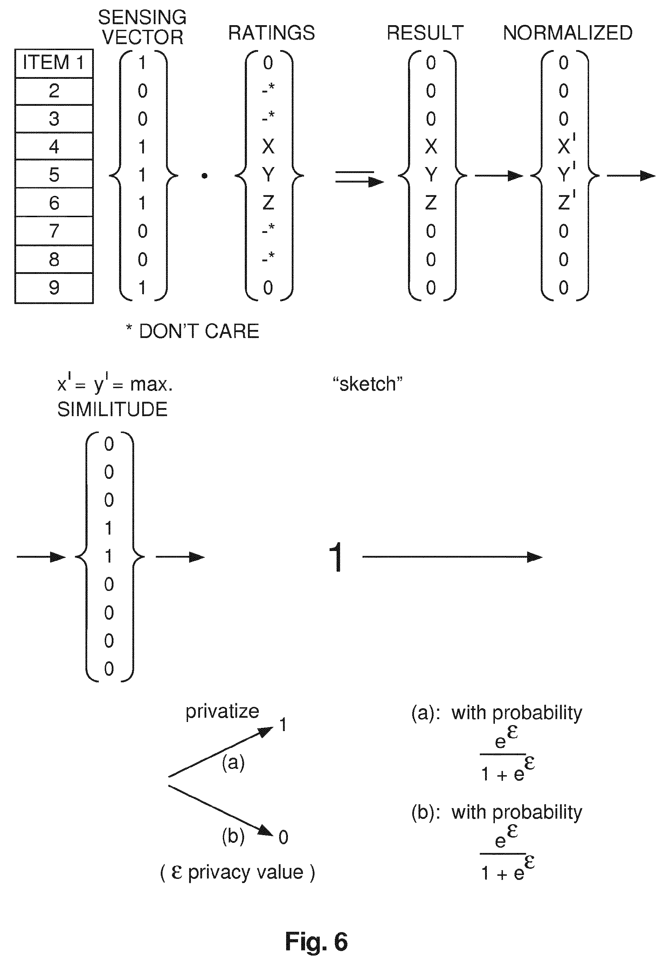

Figure 6 represents an exemplary and schematic view of vector operations performed in accordance with the second embodiment of the invention. The individual items to be rated are shown at the left side of the figure. In a sensing vector each item to be rated is assigned a logical value '1', all other items are assigned a logical value '0'. Each component of the sensing vector is multiplied with the corresponding individual rating in a scalar multiplication. In other words, the sensing vector is used as a selection mask for a rating vector. The result is a rating vector having ratings only for components that had a logical value '1' in the sensing vector. The resulting vector is normalized, indicated by indices assigned to the ratings. Any rated item that has the same rating as the maximum rating value, optionally: has a rating that lies within a predetermined range of the maximum rating, is assigned a logical value '1' in a similitude vector. All items having a logical value '1' in the similitude vector are considered being rated identical, or optionally: rated sufficiently identical. A sketch for the similitude vector is generated and then privatized in the same manner as described before.

## Claims

1. Method of recommending an item from a set of items ([N]) to a first user, the method including the steps of:

- providing, through a recommender device (200), to a user device (100) of the first user and to a number of user devices (100) of second users, a representation of selected items (A, B) from the set of items ([N]);
- receiving, at the recommender device (200), from the user device (100) of the first user and from user devices (100) of the second users, rated representations of the selected items from the set of items ([N]), wherein a rating corresponds to assigned rating values selected from an interval lying between an upper and a lower rating value, wherein each rated representation comprises at least one rated pair of items (A, B) from the set of items ([N]), the rated pairs of items (A, B) in the representations received from different users not necessarily corresponding to the same items, wherein a similitude indicator is assigned to each pair of items (A, B), indicating if the rating value of each item of the pair of items (A, B) is above a predetermined value, wherein the similitude indicator is assigned a trust value, the trust value indicating the probability of the similitude indicator being true;

- storing, at the recommender device (200), a matrix of rated pairs of items (A, B);

- performing, at the recommender device (200), a spectral clustering on the matrix, determining clusters of items linked at least through assigned rating values; and

- providing a clustered representation ([N_C]) of the set of items to the first user.

2. The method of claim 1, wherein the spectral clustering includes adding the similitude indicators, provided from a multiplicity of users, for each identical pair of items (A, B).

3. The method of claim 1, wherein the similitude indicator indicates if the ratings of each items in a pair of items are identical.

4. The method of claim 1, wherein the rating values are normalized prior to assigning a similitude indicator.

5. The method of claim 1, wherein the clustering step takes into account objective properties of the items. The method of claim 5, wherein the objective properties include one or more from the list of genre, artist, director, distributor, year of release.

6. The method of claim 1, wherein the user device (100) of the first user and the user devices (100) of the second users are connected with the recommender device (200) via an electronic network (300).

7. Method of recommending an item from a set of items ([N]) to a first user, including the steps of:

   - providing, through a recommender device (200), to a user device of the first user and to a number of user devices (100) of second users, an N-dimensional binary probing vector corresponding to a representation of selected items from the set of items ([N]);

   - receiving, at the recommender device (200), from the user device of the first user and from the user devices of the second users, privatized rated representations of the selected items from the set of items ([N]), wherein a rating corresponds to assigned rating values selected from an interval lying between an upper and a lower rating value, wherein ratings of items are considered in accordance with the probing vector, the probing vectors in the representations received from different users not necessarily being identical, wherein a similitude indicator is assigned to each item in the group of selected items from the set of items ([N]), indicating if the rating value of an item of is above a predetermined value, wherein a trust value is assigned to each similitude indicator or to each rated representation, the trust value indicating the probability of the similitude indicator being true;

- determining, at the recommender device (200), for each item the sum of the rating values, in accordance with the probing vectors;

- performing, at the recommender device (200), a one-dimensional clustering based on the sums determined for each item, determining clusters of items linked at least through assigned rating values (20); and

- providing a clustered representation ([N_C]) of the set of items to the first user.

8. The method of claim 7, wherein the probing vector is determined at random by a user's device, and wherein the probing vector is transmitted to the recommender device along with the rated representations.

9. The method of claim 7, wherein the trust value is assigned to a sketch generated from ratings of items indicated by the probing vector.

10. Recommender device for a recommender system including a program memory, a processor, a data storage and a network interface, wherein the program memory is programmed to run a method in accordance with claim 1 or 7.

11. User device (100) for a recommender system including a program memory, a processor, a data storage, a user interface and a network interface, wherein the user device is adapted to rate selected items from a set of items, to assign a similitude indicator and to assign a trust value, in accordance with claim 1 or 7, wherein the user device (100) keeps true rating values for each rated item in the memory, and wherein the user device is adapted to consider the true rating values kept in memory when receiving recommendations, for improving recommendation accuracy.

**Fig. 1**

**Fig. 2**

USER DEVICE

RECOMMENDING ENGINE

REQUEST TO RATE
ITEMS A,B

RATE A,B

=1, IF RATED
IDENTICALLY

PRIVATIZE
(ADD TRUST VALUE)

RETURN PRIVATIZED RATING

PRIVATE ZONE

REPEAT FOR
MULTIPLE
USERS AND/ OR
ITEM PAIRS

**Fig. 3**

USER DEVICE
PRIVATE ZONE

RECOMMENDING ENGINE
PUBLIC ZONE

SENSING VECTOR

RATE ITEMS IN-
DICATED BY VECTOR

=1, IF SAME (MAX)
RATING

PRIVATIZE
(ADD TRUST VALUE)

RETURN PRIVATIZED RATING

REPEAT FOR
MULTIPLE
USERS AND/ OR
VECTORS

**Fig. 4**

USER DEVICE | RECOMMENDING ENGINE
  PRIVATE ZONE | PUBLIC ZONE

GENERATE
SENSING VECTOR

RATE ITEMS INDICATED
BY VECTOR

=1, IF SAME (MAX)
RATING

PRIVATIZE
(ADD TRUST VALUE)

SEND PRIVATIZED RATING + VECTOR

REPEAT FOR
MULTIPLE VECTORS

**Fig. 5**

SENSING
VECTOR   RATINGS   RESULT   NORMALIZED

| ITEM 1 |
| 2 |
| 3 |
| 4 |
| 5 |
| 6 |
| 7 |
| 8 |
| 9 |

$$\begin{Bmatrix} 1 \\ 0 \\ 0 \\ 1 \\ 1 \\ 1 \\ 0 \\ 0 \\ 1 \end{Bmatrix} \cdot \begin{Bmatrix} 0 \\ \text{-}^* \\ \text{-}^* \\ X \\ Y \\ Z \\ \text{-}^* \\ \text{-}^* \\ 0 \end{Bmatrix} \Longrightarrow \begin{Bmatrix} 0 \\ 0 \\ 0 \\ X \\ Y \\ Z \\ 0 \\ 0 \\ 0 \end{Bmatrix} \longrightarrow \begin{Bmatrix} 0 \\ 0 \\ 0 \\ X^{\text{I}} \\ Y^{\text{I}} \\ Z^{\text{I}} \\ 0 \\ 0 \\ 0 \end{Bmatrix} \longrightarrow$$

* DON'T CARE

$x^{\text{I}} = y^{\text{I}} = $ max.
SIMILITUDE          "sketch"

$$\begin{Bmatrix} 0 \\ 0 \\ 0 \\ 1 \\ 1 \\ 0 \\ 0 \\ 0 \\ 0 \end{Bmatrix} \longrightarrow \qquad 1 \longrightarrow$$

privatize          (a):  with probability

(a) ↗ 1          $\dfrac{e^{\mathcal{E}}}{1 + e^{\mathcal{E}}}$

(b) ↘ 0          (b):  with probability

( $\mathcal{E}$ privacy value )          $\dfrac{e^{\mathcal{E}}}{1 + e^{\mathcal{E}}}$

**Fig. 6**

Europäisches
Patentamt

European
Patent Office

Office européen
des brevets

# EUROPEAN SEARCH REPORT

Application Number

EP 12 30 5170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2011/064221 A1 (MCSHERRY FRANK D [US] ET AL) 17 March 2011 (2011-03-17) <br> * abstract * <br> * paragraphs [0023] - [0062]; figure 2 * <br> ----- | 1-11 | INV. <br> G06N99/00 <br> G06N5/02 <br> H04N21/25 <br> G06Q30/02 |
| A | CHIA-LUNG ALBERT HSIEH ET AL: "Preserving Privacy in Joining Recommender Systems", INFORMATION SECURITY AND ASSURANCE, 2008. ISA 2008. INTERNATIONAL CONFERENCE ON, IEEE, PISCATAWAY, NJ, USA, 24 April 2008 (2008-04-24), pages 561-566, XP031248808, ISBN: 978-0-7695-3126-7 <br> * the whole document * <br> ----- | 1-11 | |
| A | ZEINAB ABBASSI ET AL: "A Recommender System Based on Local Random Walks and Spectral Methods", 12 August 2007 (2007-08-12), ADVANCES IN WEB MINING AND WEB USAGE ANALYSIS, SPRINGER BERLIN HEIDELBERG, BERLIN, HEIDELBERG, PAGE(S) 139 - 153, XP019115254, ISBN: 978-3-642-00527-5 <br> * the whole document * <br> ----- | 1-11 | TECHNICAL FIELDS SEARCHED (IPC) <br><br> G06N <br> G06Q <br> H04N |
| A | AUGUSTO PUCCI ET AL: "A Random-Walk Based Scoring Algorithm Applied to Recommender Engines", 20 August 2006 (2006-08-20), ADVANCES IN WEB MINING AND WEB USAGE ANALYSIS; [LECTURE NOTES IN COMPUTER SCIENCE], SPRINGER BERLIN HEIDELBERG, BERLIN, HEIDELBERG, PAGE(S) 127 - 146, XP019086172, ISBN: 978-3-540-77484-6 <br> * the whole document * <br> ----- | 1-11 | |

The present search report has been drawn up for all claims

| Place of search | Date of completion of the search | Examiner |
|---|---|---|
| The Hague | 5 July 2012 | Valencia, Erika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 30 5170

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2012

| Patent document cited in search report | Publication date | Patent family member(s) | Publication date |
|---|---|---|---|
| US 2011064221 A1 | 17-03-2011 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110064221 A
- WO 2008124285 A

- US 20110078775 A

**Non-patent literature cited in the description**

- **F. MCSHERRY ; I. MIRONOW.** Differentially Private Recommender Systems: Building Privacy into the Netflix Prize Contenders. *KDD,* 2009, 627-636